# EUROPEAN PATENT SPECIFICATION

(11) **EP 4 664 605 B1**
(45) Date of publication and mention of the grant of the patent: **25.11.2026**
(21) Application number: 24760533.0
(22) Date of filing: 20.02.2024
(51) Int. Cl.: H01M 10/613, H01M 10/625, H01M 10/658, H01M 10/6552, H01M 10/6567, H01M 10/6569, H01M 50/289, H01M 50/325, H01M 50/342

(54) **BATTERY PACK CAPABLE OF PREVENTING THERMAL PROPAGATION**
BATTERIEPACK ZUR VERHINDERUNG DER THERMISCHEN AUSBREITUNG
BLOC-BATTERIE PERMETTANT D'EMPÊCHER LA PROPAGATION THERMIQUE

(30) Priority: 20.02.2023 KR 20230022208
(43) Date of publication of application: 17.12.2025
(73) Proprietor: LG Energy Solution, Ltd., Seoul 07335 (KR)
(72) Inventor: SON, Hong Se, Daejeon 34122 (KR)
(74) Representative: Plasseraud IP
(86) International application number: PCT/KR2024/002171
(87) International publication number: WO 2024/177344

(56) References cited:
- KR-A- 20120 129 384
- KR-A- 20190 040 259
- KR-A- 20220 016 183
- KR-A- 20220 169 703
- US-A1- 2014 342 201
- US-A1- 2015 037 647
- US-A1- 2018 191 038
- US-A1- 2019 123 405

## Description

### [TECHNICAL FIELD]

This application claims the benefit of priority based on Korean Patent Application No. 10-2023-0022208 filed on February 20, 2023, entire content disclosed in the document of the patent applications is included as a part of this specification.

The present invention relates to a structure of a battery pack containing a plurality of battery modules and capable of preventing thermal propagation between battery modules therein.

### [BACKGROUND ART]

Secondary batteries, which provides ease of application depending on the product group and have electrical characteristics such as high energy density, are widely applied not only to portable devices, but also to electric vehicles or hybrid vehicles driven by an electrical driving source, and power storage devices. These secondary batteries are attracting attention as a new energy source for improving eco-friendliness and energy efficiency, not only because they have the primary advantage of being able to dramatically reduce the use of fossil fuels, but also because they do not generate any by-products due to energy use.

While small mobile devices use one or two or three battery cells per device, medium to large devices such as vehicles require high output and large capacity. Therefore, a medium to large-sized battery module in which multiple battery cells are electrically connected is used.

Since it is desirable for medium to large-sized battery modules to be manufactured in as small and light as possible, rectangular batteries and pouch-type batteries that may be stacked with high integration and have a small weight-to-capacity battery are mainly used as battery cells for medium to large-sized battery modules.

FIG. 1 illustrates a battery module. Referring to FIG. 1, a battery module M includes a battery cell laminate in which a plurality of pouch-type battery cells are stacked and a module frame accommodating the same. The battery cells are connected to a module bus bar in series or in parallel. The anode and cathode terminals connected to the module bus bar are exposed to the outside of the module frame, electrically connecting the battery cell stack to the outside.

FIG. 2 illustrates a general battery pack. Referring to FIG. 2, a plurality of battery modules M may be accommodated in one pack frame to form a battery pack P. The battery modules M are connected to a pack bus bar in series or in parallel.

FIGS. 3 and 4 illustrate cross-sections of the battery pack of FIG. 2. Referring to FIGS. 3 and 4, a pack frame 1 includes a bottom plate 11, a side plate 12, and a plurality of partition plates 13 isolating the battery modules M from each other.

Meanwhile, the battery module M may ignite due to short circuit, impact, overvoltage, overcurrent, etc. of the battery cell and battery cell laminate. In case of ignition, thermal runaway at the pack level may occur due to chain ignition between modules when thermal propagation between battery modules M is not prevented. Accordingly, the partition plate 13 may include an insulating material to prevent thermal propagation between the battery modules M.

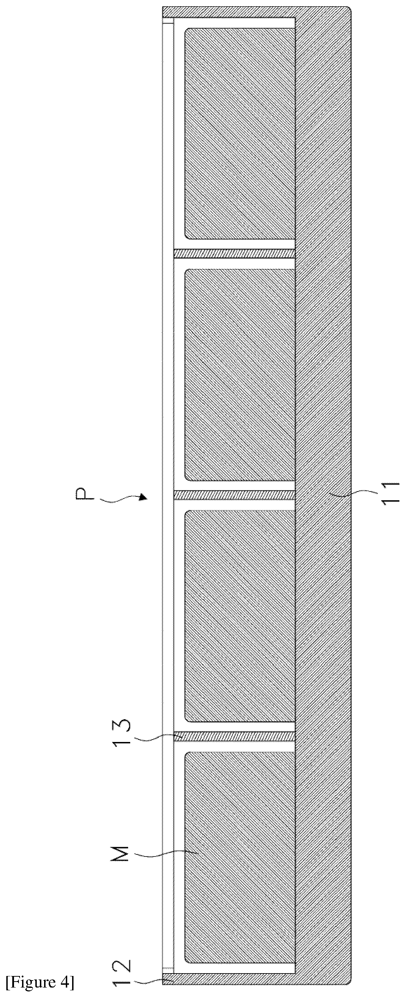

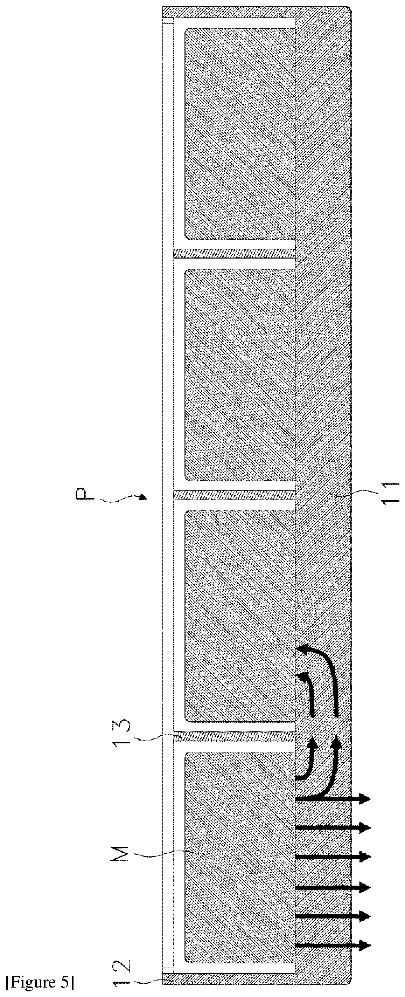

FIG. 5 illustrates a thermal propagation path in the battery pack of FIG. 4. Referring to FIG. 5, heat generated from the battery module M may be conducted to the bottom plate 11 and discharged to the outside. Since the bottom plate 11 is mainly made of a metal material with high thermal conductivity, the conduction of heat discharged from the battery module M may be facilitated. In addition, for such heat discharge effect, a thermally conductive resin layer may be applied to the upper surface of the bottom plate 11 where the battery module M is placed.

Here, heat energy discharged from the battery module M and conducted to the bottom plate 11 may be propagated to adjacent battery modules through the bottom plate 11. In particular, when the battery module M ignites, such thermal propagation may cause thermal runaway at the pack level.

However, as described above, discharging heat from the battery module M to the outside and preventing thermal propagation between battery modules M are conflicting objects with respect to the thermal conductivity of the bottom plate 11. Therefore, it is difficult to achieve these simultaneously. US 2014/0342201 and US 2019/0123405 A1 are known.

### [DETAILED DESCRIPTION OF THE INVENTION]

### [TECHNICAL PROBLEM]

In order to solve above-described problems of the above-described prior art, it is an object of the present invention to provide a structure of a battery pack that facilitates heat discharge and prevents thermal propagation.

It is another object of the present invention to provide a structure of a battery pack with a high heat capacity pack frame so as to prevent a rapid rise in temperature despite ignition of the battery module.

It is yet another object of the present invention to provide a structure of a battery pack having high thermal conductivity for discharge of heat energy generated from battery modules to the outside and low thermal conductivity for thermal propagation between battery modules.

It is yet another object of the present invention to provide a structure of a battery pack in which an ignited battery module may be cooled.

The technical problems to be solved by the present invention are not limited to the objects described above, and other objects and advantages of the present invention that are not described may be understood through the following description and will be more clearly understood by the examples of the present invention. Additionally, it is apparent that the objects and advantages of the present invention may be embodied by the means and combinations thereof indicated in the claims.

### [TECHNICAL SOLUTION]

In order to solve the above-described problems, the present invention provides a structure of a battery pack including: a pack frame; and a plurality of battery modules arranged in the pack frame along a widthwise direction of the pack frame and spaced apart from each other, wherein the pack frame includes: a bottom plate; a side plate; a cavity is provided in the bottom plate and filled with a coolant without empty space; and an outlet port communicating an inside of the cavity and an outside of the pack frame.

At least a portion of the cavity is located within a section in the widthwise direction extending from one widthwise end of a first battery module to other widthwise end of a second battery module adjacent to the first battery module in the widthwise direction. That is, the cavity is disposed on a path where heat generated from the first battery module is conducted to the second battery module through the bottom plate.

A plurality of cavities may be provided. In particular, the plurality of cavities may be arranged along the widthwise direction. For example, the cavity may include a first cavity and a second cavity corresponding to the first battery module and the second battery module, respectively. That is, the plurality of cavities may be provided to correspond to the plurality of battery modules, respectively. In such case, thermal propagation from the specific battery module where ignition occurred may be prevented.

The arrangement relationship between the battery module and the cavity may vary. For example, as described above, one battery module may be disposed above one cavity, one group of battery modules may be disposed above one cavity, or one battery module may be disposed above one group of cavities. Alternatively, one group of battery modules may be disposed above one group of cavities.

A partition plate may be provided between the first battery module and the second battery module to isolate the first battery module and the second battery module from each other in the widthwise direction. It is preferable that the partition plate has a low thermal conductivity to block thermal propagation between the battery modules. To this end, the partition plate may include an insulating material.

The coolant may absorb heat energy conducted from the battery module to the bottom plate and emit the same to the outside. Here, the specific heat of the coolant has higher than that of the bottom plate such that a large amount of heat energy may be absorbed released slowly without a large temperature change.

The coolant may have a boiling point equal to or higher than 100 degrees and equal to or lower than 140 degrees. As a result, the coolant may be vaporized when the battery module ignites and thermal runaway occurs. As the coolant absorbs heat necessary for vaporization from the battery module, the battery module may be cooled.

The coolant may include water. Additionally, the coolant may include antifreeze. Preferably, the coolant may include coolant including water and antifreeze. Water is advantageous in absorbing heat due to a large specific heat thereof, and antifreeze is advantageous in preventing the coolant from freezing even at low temperatures so as to prevent volume expansion or contraction due to solidification thereof. Additionally, the boiling point of such coolant is equal to or higher than 100 degrees and equal to or lower than 140 degrees Celsius.

The outlet port is opened when the internal pressure of the cavity is higher than a predetermined pressure. For example, the outlet port may include a relief valve opening when an internal pressure of the cavity may be equal to or higher than the predetermined pressure. Alternatively, the outlet port may include a rupture disk rupturing when an internal pressure of the cavity may be equal to or higher than the predetermined pressure.

When the battery module ignites, the coolant vaporizes, thereby increasing the internal pressure of the cavity. As a result, the outlet port may open and the coolant may be discharged to the outside. Here, the discharged coolant may be in gaseous phase and/or in liquid phase. The cavity with the coolant discharged becomes an air chamber, which may make it difficult for heat generated from the battery module to be conducted to other adjacent battery modules through the bottom plate.

The outlet port may be located at an upper portion of the cavity or at a lower portion of the cavity. When the outlet port is located at the upper portion of the cavity, the non-vaporized liquid coolant may remain in the lower portion of the cavity and act as a heat absorber during the vaporization and the discharge of the coolant. When the outlet port is located at the lower portion of the cavity, the non-vaporized liquid coolant may be discharged at once during the vaporization of the coolant, and thus the air chamber described above may be formed more quickly.

The present invention also provides a structure of a vehicle including the battery pack. The battery pack may be built into the vehicle as a power source. The vehicle may be an electric vehicle or a hybrid vehicle. The vehicle may be a two-wheeled vehicle or a four-wheeled vehicle. However, the structure of the vehicle is not limited thereto, and the battery pack may not necessarily serve as a power source of the vehicle.

### [ADVANTTAGEOUS EFFECTS]

The present invention may provide a structure of a battery pack including a pack frame with excellent thermal conductivity and high heat capacity.

The present invention may also provide a structure of a battery pack capable of: preventing rapid rise in temperature; and smoothly discharging heat despite ignition of the battery module by including a coolant with high specific heat.

The present invention may also provide a structure of a battery module capable of cooling through vaporization of the coolant.

The present invention may also provide a structure of a battery pack in which thermal propagation after the entirety of coolant is vaporized occurs mainly through gas convection, and thermal propagation is significantly delayed compared to heat conduction through a solid.

In addition, the present invention may have various other effects, and the descriptions thereof will be given in each embodiment, or the description of the effects that may be easily inferred by a person skilled in the art will be omitted.

### [BRIEF DESCRIPTION OF DRAWINGS]

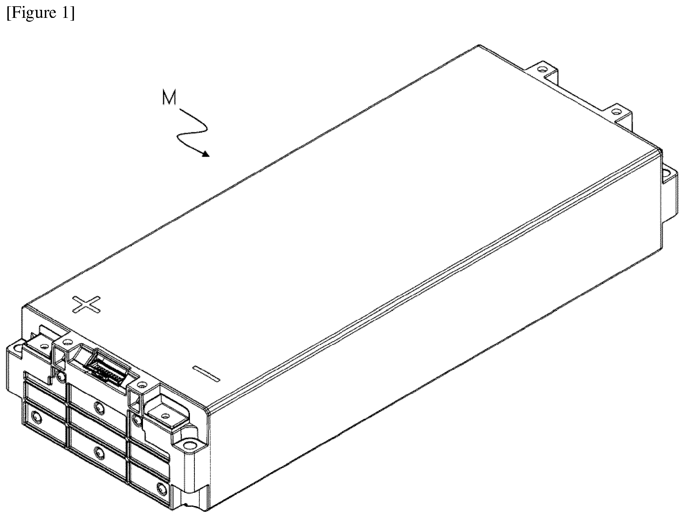

FIG. 1 illustrates a battery module.

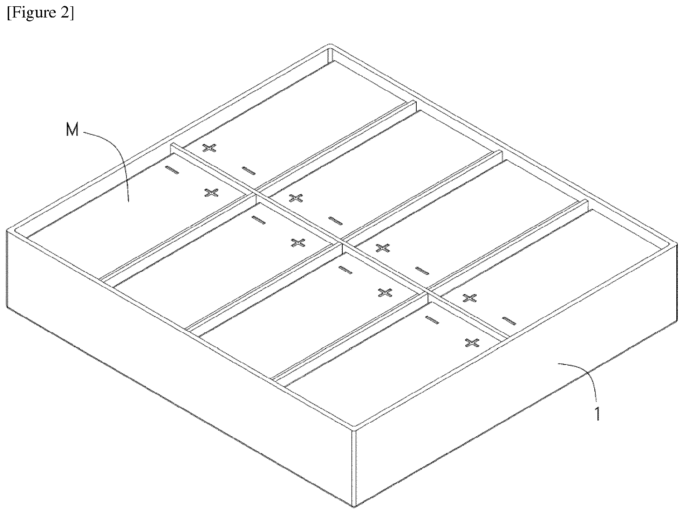

FIG. 2 illustrates a general battery pack.

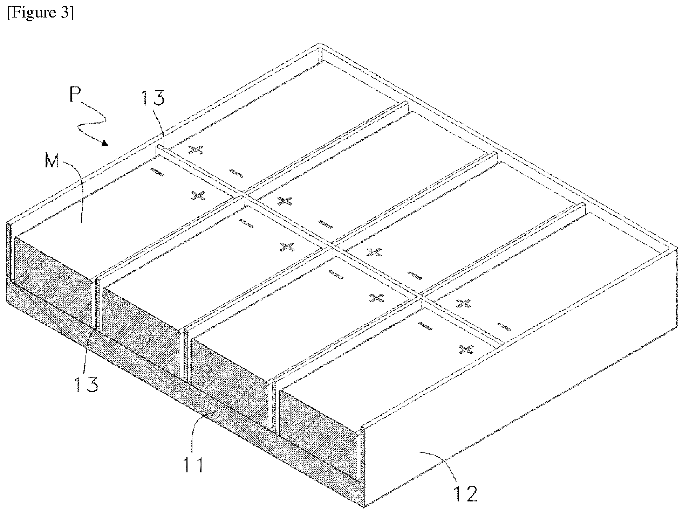

FIGS. 3 and 4 illustrate cross-sections of the battery pack of FIG. 2.
FIG. 5 illustrates a thermal propagation path in the battery pack of FIG. 4.

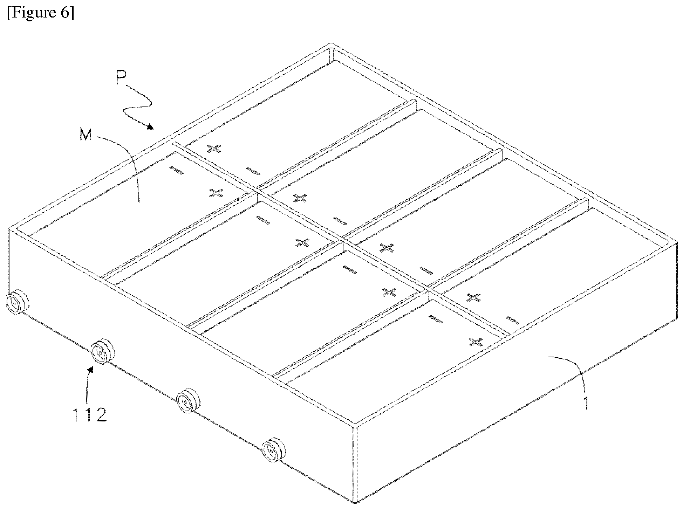

FIG. 6 illustrates a battery pack according to an embodiment of the present invention.

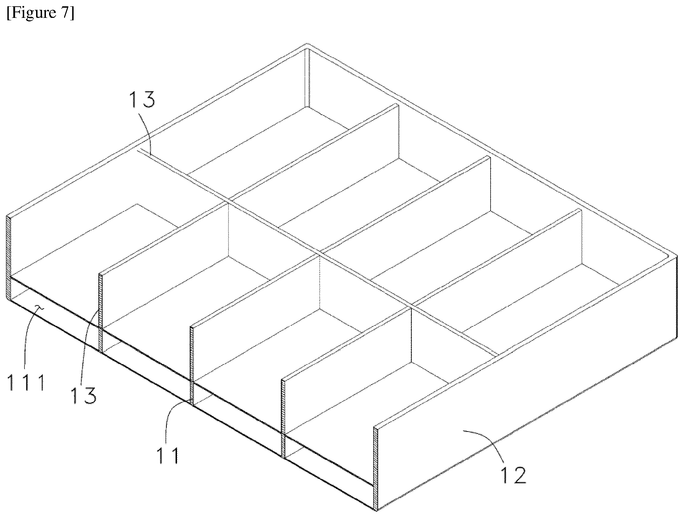

FIG. 7 illustrates a pack frame according to an embodiment of the present invention.

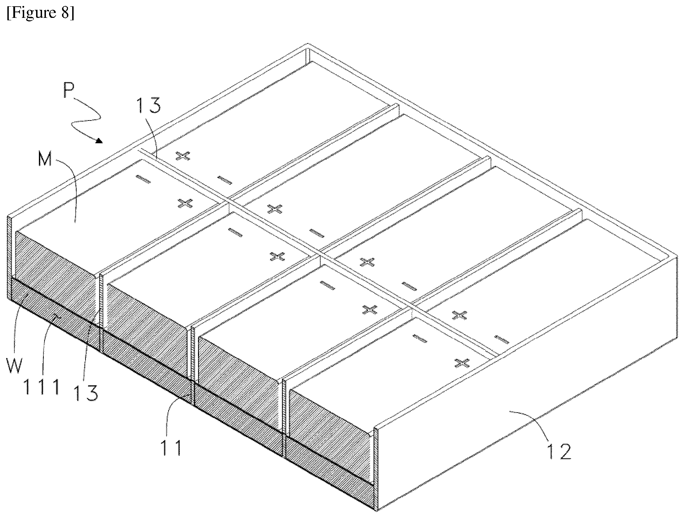

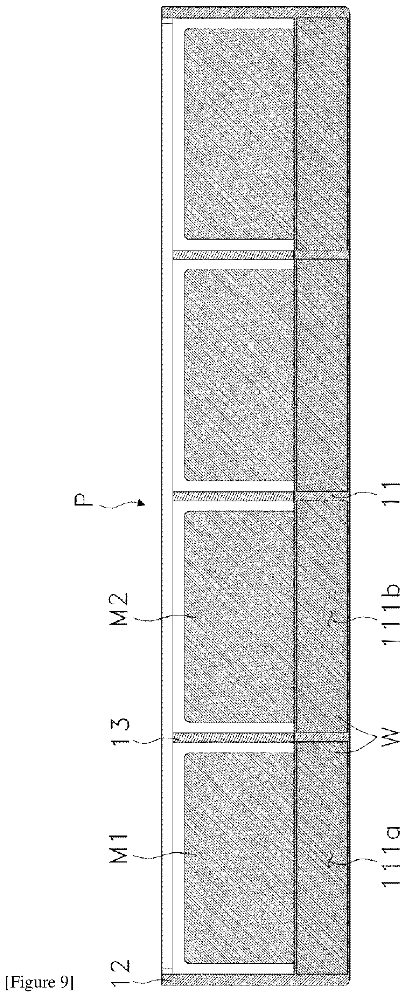

FIGS. 8 and 9 illustrate a cross section of a battery pack according to an embodiment of the present invention.

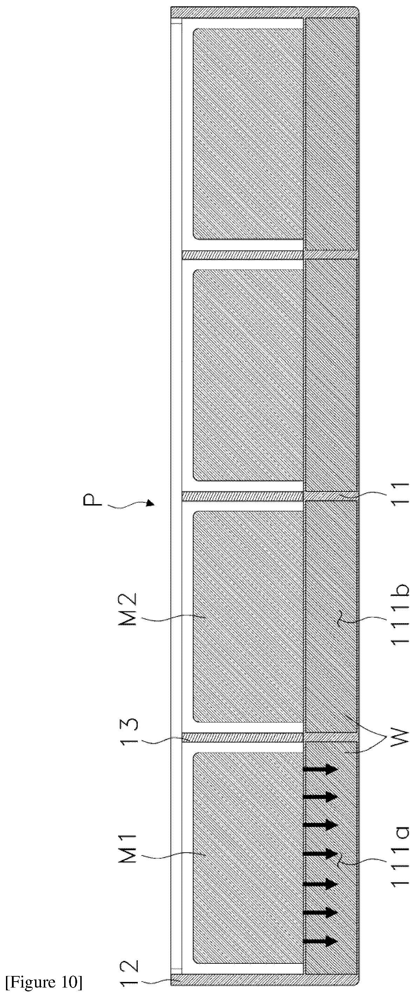

FIG. 10 illustrates a thermal propagation path in the battery pack of FIG. 9.

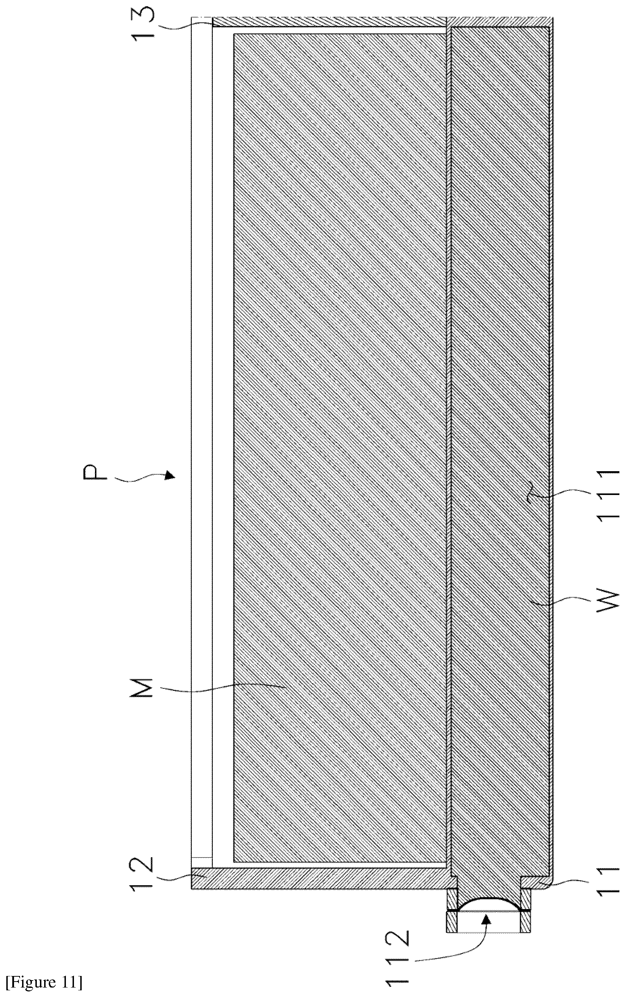

FIG. 11 illustrates another cross section of a battery pack according to an embodiment of the present invention.

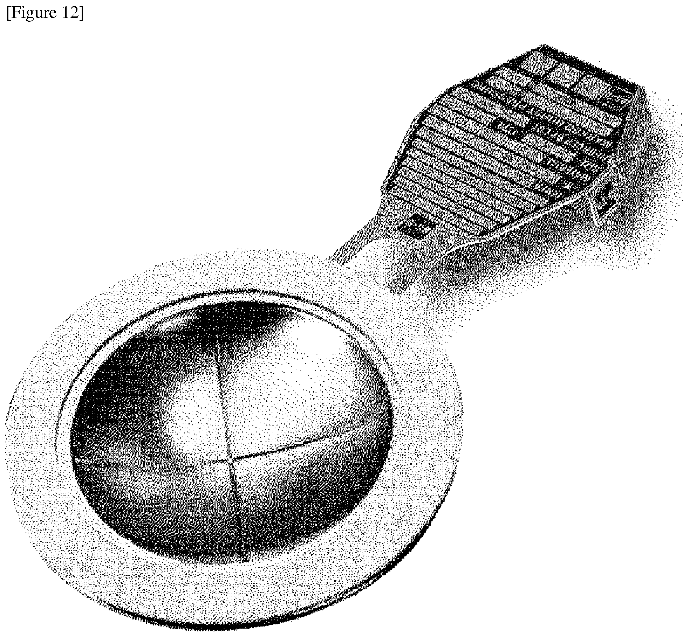

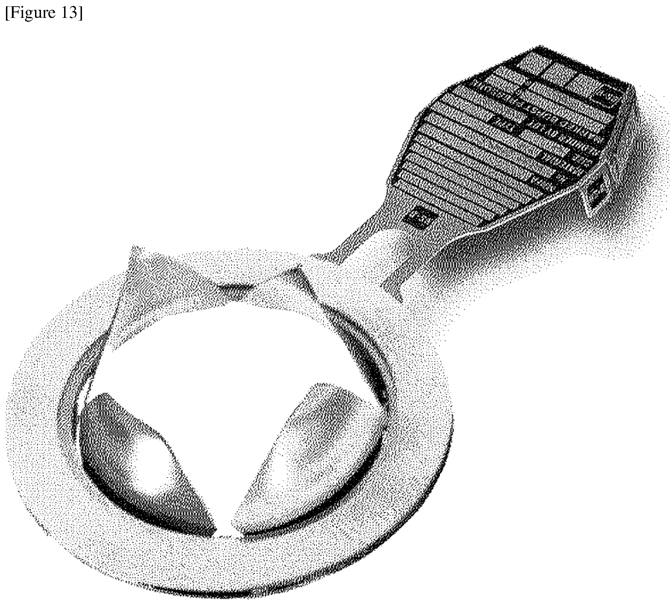

FIGS. 12 and 13 illustrate the rupture disk before and after rupture, respectively.

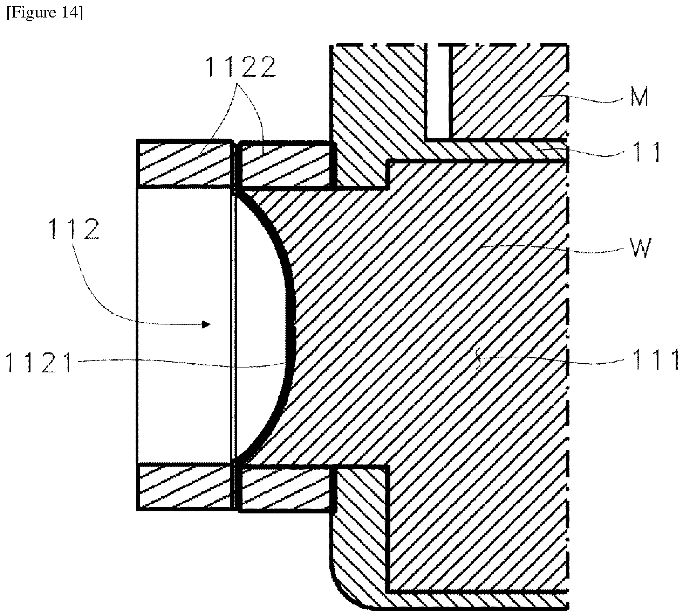

FIGS. 14 to 16 illustrate an opening process of an outlet port according to an embodiment of the present invention.

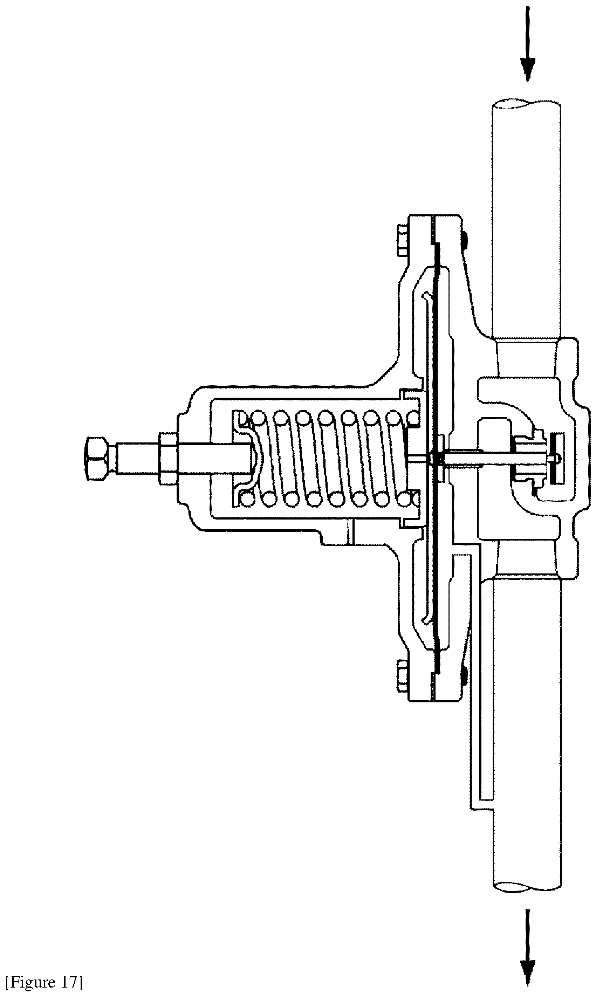

FIG. 17 illustrates a relief valve according to a modified example.

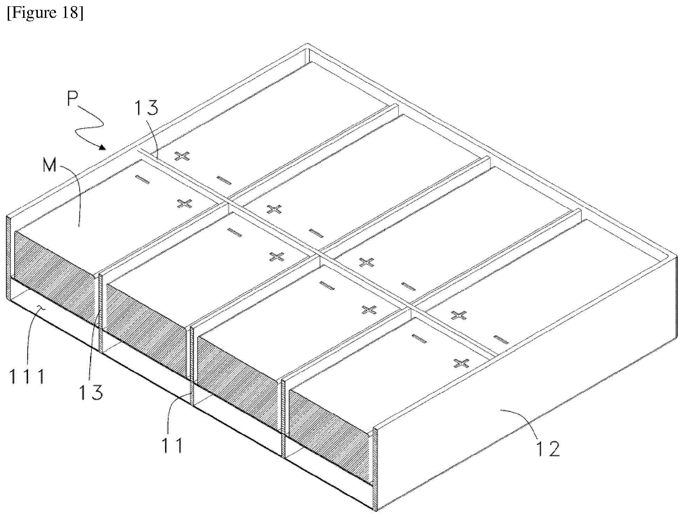

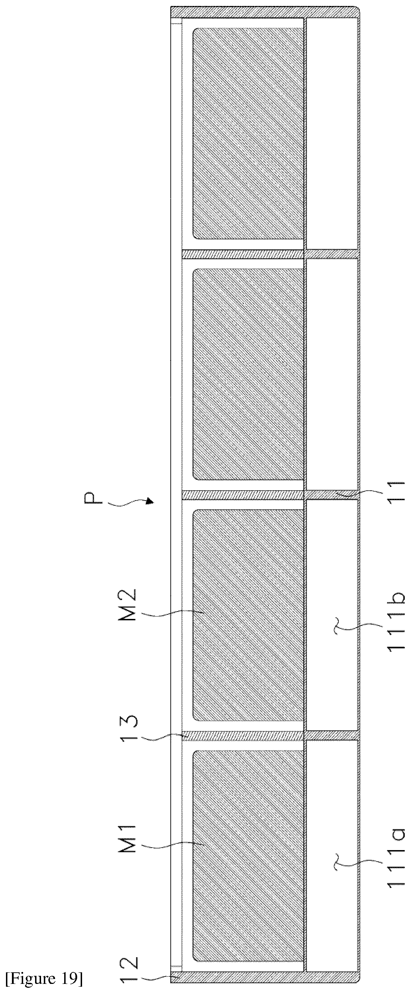

FIGS. 18 and 19 illustrate a state of a battery pack wherein the entirety of coolant is evaporated according to an embodiment of the present invention.

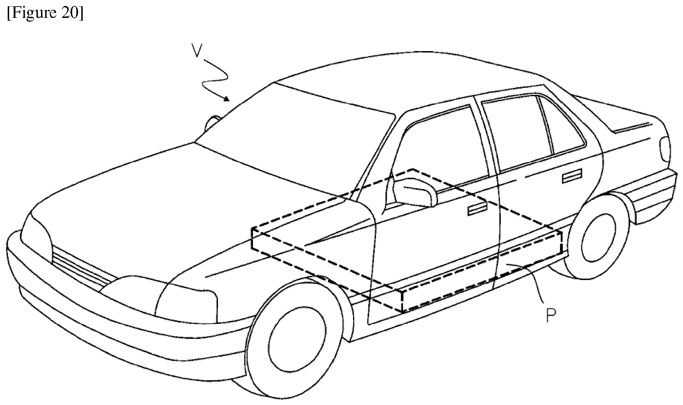

FIG. 20 illustrates a vehicle with a battery pack built in according to an embodiment of the present invention.

### [DESCRIPTION OF REFERENCE NUMERALS]

M: battery module
   M1: first battery module
   M2: second battery module
P: battery pack
1: pack frame
   11: bottom plate
      111: cavity
         111a: first cavity
         111b: second cavity
      112: outlet port
         1121: rupture disk
         1122: holder
   12: side plate
   13: partition plate
      W: coolant
      V: vehicle

### [DETAILED DESCRIPTION OF THE PREFERRED EMBODIMENTS]

The above-described objects, features and advantages will be described in detail hereinafter with reference to the accompanying drawings such that those skilled in the art will be able to implement the technical idea of the present invention. In describing the present invention, when it is determined that a detailed description of prior art related to the present invention unnecessarily obscures the gist of the present invention, the detailed description thereof will be omitted. Hereinafter, preferred embodiments according to the present invention will be described in detail with reference to the accompanying drawings. In the drawings, identical reference numerals are used for indicating identical or similar components.

While "first", "second", etc. are used to describe various elements, these elements are of course not limited by these terms. These terms are only used to distinguish one element from another, and unless specifically stated otherwise, a first element may also be a second element.

Throughout the specification, unless stated otherwise, each element may be singular or plural.

Hereinafter, "arranging an element at upper portion (or lower portion) of an element" or "arranging an element at top (or bottom) of an element" refers to not only "arranging an element to be in contact with upper surface (or lower surface)" but also to "arranging an element above upper surface (or lower surface) with another element interposed therebetween."

Additionally, when an element is described as being "connected to," "coupled with," or "in contact with" another element, it should be understood that the element may be "directly connected to," "directly coupled with," or "directly in contact with" another element, or the element may be "connected to," "coupled with," or "in contact with" another element with yet another element interposed therebetween or via yet another element.

The expressions in singular form used herein include expressions in plural form unless the context explicitly dictates otherwise. Terms such as "consists of" or "comprises" used herein should not be construed as necessarily including all of the elements or steps described in the specification, and should be construed as not including some of the elements or steps, or including additional elements or steps.

Throughout the specification, "A and/or B" refers to A, B or A and B unless specifically stated otherwise, and "C to D" refers to from equal to or higher than C to equal to or lower D unless specifically stated otherwise.

The present invention provides a structure of a battery pack including: a pack frame; and a plurality of battery modules arranged in the pack frame along a widthwise direction of the pack frame and spaced apart from each other, wherein the pack frame includes: a bottom plate; a side plate; a cavity may be provided in the bottom plate and filled with a coolant without empty space; and an outlet port communicating an inside of the cavity and an outside of the pack frame.

Hereinafter, a preferred embodiment of the present invention will be described with reference to the accompanying drawings.

FIG. 1 illustrates a battery module. Referring to FIG. 1, the battery module M may include a battery cell laminate and a housing accommodating the battery cell laminate. The battery cell laminate may be a plurality of battery cells, particularly a stack of pouch-type battery cells. However, the battery cell laminate is not limited thereto and a single unit of secondary batteries of any type will suffice.

The plurality of battery cells may be connected to each other in series or in parallel by a module bus bar. Anode and cathode terminals may be connected to the module bus bar and exposed to the outside of the housing.

FIG. 6 illustrates a battery pack according to an embodiment of the present invention. Referring to FIG. 6, a plurality of battery modules M may be integrated to form a battery pack P in order to increase voltage and/or capacity. The battery pack P may include a plurality of battery modules M and a pack frame 1 accommodating the plurality of battery modules M.

The battery module M may be arranged in a grid shape within the pack frame 1 such that the anode and cathode terminals face each other. The anode and cathode terminals may be connected to each other at the same polarity or at opposite polarity through a pack bus bar, and accordingly, the battery modules M may be connected to each other in series or in parallel.

FIG. 7 illustrates a pack frame according to an embodiment of the present invention. Referring to FIG. 7, the pack frame 1 may include a bottom plate 11 constituting the lower portion thereof, and a side plate 12 constituting the side portion thereof.

The pack frame 1 may include a partition plate 13 that isolates the battery modules M from each other. The partition plate 13 may be provided to individually isolate battery modules M from each other, or groups of battery modules M from each other.

The pack frame 1 may be made of metal material. Accordingly, the pack frame 1 may have high thermal conductivity and low heat capacity.

The partition plate 13 may include an insulating material. As a result, the partition plate 13 may prevent lateral thermal propagation between the battery modules M.

A cavity 111 may be provided on the bottom plate 11. Hereinafter, the cavity 111 will be described in more detail.

FIGS. 8 and 9 illustrate a cross section of a battery pack according to an embodiment of the present invention. Referring to FIGS.8 and 9, the cavity 111 may be filled with coolant W. It is preferable that the coolant W fills up the cavity 111 without any empty spaces. Here, the coolant W may simply be stored within the cavity 111 without entering or exiting the cavity 111 or flowing within the cavity 111.

The coolant W may include a material with a specific heat higher than that of the material forming the bottom plate 11. For example, the coolant W may include water. Water is known to have a very high specific heat. Here, the coolant W may contain antifreeze in order to remain in a liquid state without freezing even at low temperatures.

The boiling point of the coolant W may be equal to the temperature at which ignition of the battery module M begins. Specifically, the coolant W may have a boiling point of 100 degrees Celsius to 140 degrees Celsius. As a result, the coolant W may vaporize as the ignition of the battery module M starts. The coolant W according to the embodiment may include cooling liquid containing water mixed with antifreeze, and such coolant is known to have a boiling point of about 120 degrees Celsius.

Referring to FIG. 9, at least a portion of the cavity 111 may be located within a section in the widthwise direction extending from one widthwise end of a first battery module M1 to other widthwise end of a second battery module M2 adjacent to the first battery module M1 in the widthwise direction. In other words, at least a portion of the cavity 111 is disposed on a path through which heat generated from the first battery module M1 is conducted to the second battery module M2 within the bottom plate 11.

The arrangement relationship between the battery module M and the cavity 111 may vary. For example, as described above, one battery module M may be disposed above one cavity 111, one group of battery modules M may be disposed above one cavity 111, or one battery module M may be disposed above one group of cavities. Alternatively, one group of battery modules M may be disposed above one group of cavities 111. According to the embodiment, the cavity 111 under each battery module M may have borders corresponding to the side plate 12 and the partition plate 13 surrounding a space where the battery module M is placed. According to the embodiment, the first battery module M1 may be disposed above the first cavity 111a, and the second battery module M2 may be disposed above the second cavity 111b.

FIG. 10 illustrates a thermal propagation path in the battery pack of FIG. 9. Referring to FIG. 10, heat generated from the first battery module M1 may be conducted to the bottom plate 11. Here, the bottom plate 11 may have a high heat capacity by including the first cavity 111a filled with the coolant W, and the temperature of the bottom plate 11 may rise more slowly than without the first cavity 111a and the coolant W. The heat absorbed by the coolant W may be slowly released to the outside. Through the mechanism described above, heat generated from the first battery module M1 may be discharged to the outside.

Alternatively, the heat absorbed by the coolant W in the first cavity 111a may be conducted to the coolant W filled in the second cavity 111b. In this case as well, the coolant W filled in the second cavity 111b has a high heat capacity such that the temperature may rise slowly and the absorbed heat may be slowly released. As a result, thermal propagation from the first battery module M1 to the second battery module M2 may be significantly delayed.

FIG. 11 illustrates another cross section of a battery pack according to an embodiment of the present invention. Referring to FIG. 11, the pack frame 1 may include an outlet port 112 communicating an inside of the cavity 111 with an outside of the pack frame 1. The outlet port 112 may provided to be normally sealed and to open under specific conditions.

The outlet port 112 may open when the internal pressure of the cavity 111 is higher than a predetermined pressure. The internal pressure may refer to the pressure difference between the inside and outside of the cavity 111.

FIGS. 12 and 13 illustrate the rupture disk before and after rupture, respectively. Referring to FIG. 12 and 13, a rupture disk is a disk-shaped member that is installed to seal between one space and another space and inverts and ruptures when the pressure difference between the one space and another space reaches a predetermined pressure.

FIGS. 14 to 16 illustrate an opening process of an outlet port according to an embodiment of the present invention. Referring to FIGS. 14 to 16, the outlet port 112 may include the rupture disk 1121. The rupture disk 1121 may be interposed between a pair of holders 1122 provided inside and outside the outlet port 112 and fastened to each other to seal the outlet port 112.

Referring back to FIG. 10, when the first battery module M1 ignites, the heat generated from the first battery module M1 may be absorbed by the coolant W filled in the first cavity 111a, which causes the temperature of the coolant W to rise. When the temperature of the coolant W reaches the boiling point thereof, the coolant W vaporizes. During the vaporization, the coolant W may cool the first battery module M1 by absorbing the heat from the first battery module M1, which delays thermal runaway caused by ignition of the first battery module M1.

Here, the heat conducted to the coolant W filled in the second cavity 111b may be absorbed as the coolant W filled in the second cavity 111b vaporizes.

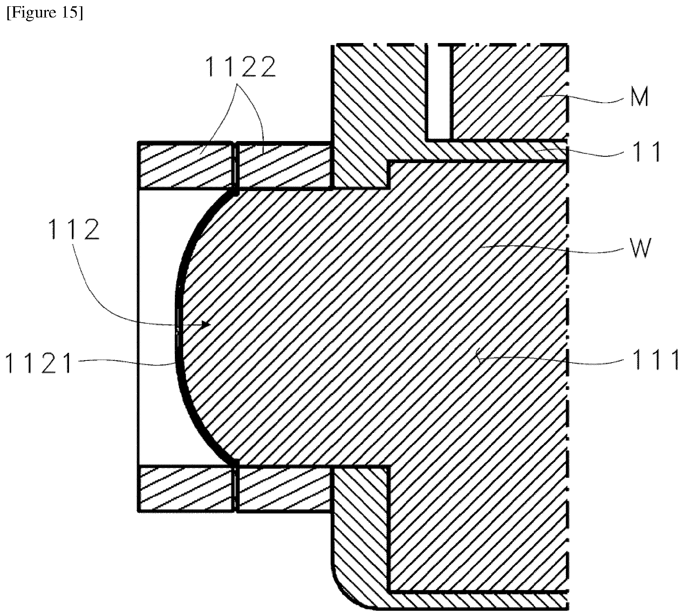

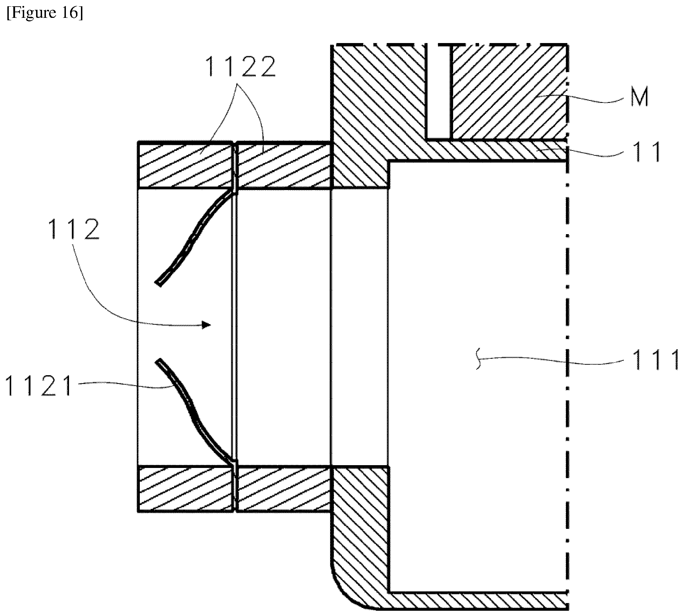

Referring to FIGS. 15 and 16, as the coolant W is vaporized, the pressure difference between the inside and outside of the cavity 111 increases by the vapor pressure of the coolant W, and when the pressure difference reaches or exceeds the predetermined pressure, the rupture disk 1121 is inverted as illustrated in FIG. 15, ruptures as illustrated in FIG. 16. Accordingly, the outlet port 112 is opened.

Here, as the outlet port 112 opens, the coolant W may be discharged to the outside of the cavity 111. Here, the discharged coolant W may be in gaseous form and/or in liquid form. The cavity 111 from which the coolant W is discharged may serve an air chamber.

The outlet port 112 may be located at an upper portion of the cavity 111 or at a lower portion of the cavity 111. When the outlet port 112 is located at the upper portion of the cavity 111, the non-vaporized liquid coolant W may remain in the lower portion of the cavity 111 and act as a heat absorber during the vaporization and the discharge of the coolant W. When the outlet port 112 is located at the lower portion of the cavity 111, the non-vaporized liquid coolant W may be discharged at once during the vaporization of the coolant W, and thus the air chamber described above may be formed more quickly.

FIG. 17 illustrates a relief valve according to a modified example. Referring to FIG., 17, the outlet port 112 may include a release valve that opens when the internal pressure of the cavity 111 is higher than a predetermined pressure, instead of the rupture disk 1121 According to the modified example, The release valve is a type of valve that opens when the pressure difference between the inlet and the outlet is equal to or higher than a predetermined pressure, and closes when the pressure difference is less than the predetermined pressure. When the release valve is provided at the outlet port 112, the coolant W is discharged only until the increased internal pressure of the cavity 111 decreases back to a predetermined level or less such that the discharge speed of the coolant W may be reduced and the effect of absorbing the heat of vaporization of the coolant W may last longer.

FIGS. 18 and 19 illustrate a state of a battery pack wherein the entirety of coolant is evaporated according to an embodiment of the present invention. Referring to FIGS. 18 and 19, as the cavity 111 forms an air chamber, the cross-sectional area of the path in the bottom plate 11 is very small through which heat is conducted from the first battery module M1 to the second battery module M2. In addition, the surface area of the bottom plate 11 exposed the outside is greatly increased as the cavity 111 is provided and the outlet port 112 is opened. Accordingly, the heat conducted from the first battery module M1 to the bottom plate 11 is conducted to the second battery module M2 only through a very narrow path or by gas convection within the cavity 111such that a lot of heat is released to the outside through the cavity 111, which acts as a type of cooling fin. As a result, in the battery pack P according to the embodiment, thermal propagation between modules may be delayed or prevented.

In short, according to an embodiment of the present invention, normally, the heat generated from the battery module M is absorbed by the coolant W, which has a high specific heat, and is slowly radiated to the outside without causing a large temperature change, thereby causing the battery pack P to be thermally stable. In addition, when the ignition of the battery module M starts, the heat generated from the battery module M may be absorbed by temperature change and vaporization of the coolant W to cool the battery module M. Finally, as the thermal runaway of the battery module M continues, the outlet port 112 is opened by vaporization of the coolant W, and thus the cavity 111 forms an air chamber to reduce the thermal conductivity of the bottom plate 11, thereby preventing thermal propagation between battery modules.

As described above, the present invention may provide a structure of a battery pack wherein the heat capacity and thermal conductivity of the pack frame 1 change as different actions occur at different times including before, at the start of, and during the ignition of the battery module M, thereby solving the conflicting tasks of heat discharge and thermal propagation prevention at the same time.

The present invention also provides a structure of a vehicle including the battery pack P.

FIG. 20 illustrates a vehicle with a battery pack built in according to an embodiment of the present invention. Referring to FIG. 20, the battery pack P may be built into the vehicle V as a power source. The vehicle V may be a hybrid vehicle or an electric vehicle, but is not limited thereto. Additionally, the vehicle V may be a two-wheeled vehicle or a four-wheeled vehicle, but is not limited thereto.

## Claims

1. A battery pack (P) comprising:
a pack frame (1); and
a plurality of battery modules (M) arranged in the pack frame (1) along a widthwise direction of the pack frame (1) and spaced apart from each other,
wherein the pack frame (1) comprises:
a bottom plate (11);
a side plate (12);
a cavity (111) is provided in the bottom plate (11) and filled with a coolant (W) without empty space; and
an outlet port (112) communicating an inside of the cavity (111) with an outside of the pack frame (1), wherein at least a portion of the cavity (111) is located within a section in the widthwise direction extending from one widthwise end of a first battery module (M1) to other widthwise end of a second battery module (M2) adjacent to the first battery module (M1) in the widthwise direction, and
wherein the outlet port (112) is configured to open when an internal pressure of the cavity (111) is equal to or higher than a predetermined pressure.

2. The battery pack (P) of claim 1, wherein a plurality of cavities (111) is provided.

3. The battery pack (P) of claim 2, wherein the plurality of cavities (111) is arranged along the widthwise direction.

4. The battery pack (P) of claim 3, wherein the cavity (111) comprises a first cavity (111a) and a second cavity (111b) corresponding to the first battery module (M1) and the second battery module (M2), respectively.

5. The battery pack (P) of claim 1, wherein a partition plate (13) is provided between the first battery module (M1) and the second battery module (M2) to isolate the first battery module (M1) and the second battery module (M2) from each other in the widthwise direction.

6. The battery pack (P) of claim 5, wherein the partition plate (13) comprises an insulating material.

7. The battery pack of claim 1, wherein the outlet port comprises a relief valve opening when an internal pressure of the cavity is equal to or higher than a predetermined pressure.

8. The battery pack of claim 1, wherein the outlet port comprises a rupture disk rupturing when an internal pressure of the cavity is equal to or higher than a predetermined pressure.

9. The battery pack (P) of claim 1, wherein the outlet port (112) is located at an upper portion of the cavity (111).

10. The battery pack (P) of claim 1, wherein the outlet port (112) is located at a lower portion of the cavity (111).

11. The battery pack (P) of claim 1, wherein the coolant (W) has a boiling point equal to or higher than 100 degrees and equal to or lower than 140 degrees.

12. The battery pack (P) of claim 1, wherein the coolant (W) comprises water.

13. The battery pack (P) of claim 1, wherein the coolant (W) comprises antifreeze.

14. The battery pack (P) of claim 1, wherein the coolant (W) comprises cooling liquid containing water and antifreeze.

## Patentansprüche

1. Batteriepack (P), umfassend:
einen Packrahmen (1); und
eine Vielzahl von Batteriemodulen (M), die in dem Packrahmen (1) entlang einer Breitenrichtung des Packrahmens (1) angeordnet und voneinander beabstandet sind,
wobei der Packrahmen (1) umfasst:
eine Bodenplatte (11);
eine Seitenplatte (12);
einen Hohlraum (111), der in der Bodenplatte (11) vorgesehen und ohne Hohlraum mit einem Kühlmittel (W) gefüllt ist; und
eine Auslassöffnung (112), die ein Inneres des Hohlraums (111) mit einem Äußeren des Packrahmens (1) verbindet, wobei sich mindestens ein Abschnitt des Hohlraums (111) innerhalb eines Abschnitts in der Breitenrichtung befindet, der sich von einem Breitenende eines ersten Batteriemoduls (M1) zu einem anderen Breitenende eines zweiten Batteriemoduls (M2) erstreckt, das in der Breitenrichtung an das erste Batteriemodul (M1) angrenzt, und
wobei die Auslassöffnung (112) so konfiguriert ist, dass sie sich öffnet, wenn ein Innendruck des Hohlraums (111) gleich oder höher als ein vorbestimmter Druck ist.

2. Batteriepack (P) nach Anspruch 1, wobei eine Vielzahl von Hohlräumen (111) vorgesehen ist.

3. Batteriepack (P) nach Anspruch 2, wobei die Vielzahl von Hohlräumen (111) entlang der Breitenrichtung angeordnet ist.

4. Batteriepack (P) nach Anspruch 3, wobei der Hohlraum (111) einen ersten Hohlraum (111a) und einen zweiten Hohlraum (111b) umfasst, die dem ersten Batteriemodul (M1) bzw. dem zweiten Batteriemodul (M2) entsprechen.

5. Batteriepack (P) nach Anspruch 1, wobei eine Trennplatte (13) zwischen dem ersten Batteriemodul (M1) und dem zweiten Batteriemodul (M2) vorgesehen ist, um das erste Batteriemodul (M1) und das zweite Batteriemodul (M2) in der Breitenrichtung voneinander zu isolieren.

6. Batteriepack (P) nach Anspruch 5, wobei die Trennplatte (13) ein Isoliermaterial umfasst.

7. Batteriepack (P) nach Anspruch 1, wobei die Auslassöffnung ein Überdruckventil umfasst, das sich öffnet, wenn ein Innendruck des Hohlraums gleich oder höher als ein vorbestimmter Druck ist.

8. Batteriepack (P) nach Anspruch 1, wobei die Auslassöffnung eine Berstscheibe umfasst, die birst, wenn ein Innendruck des Hohlraums gleich oder höher als ein vorbestimmter Druck ist.

9. Batteriepack (P) nach Anspruch 1, wobei sich die Auslassöffnung (112) an einem oberen Abschnitt des Hohlraums (111) befindet.

10. Batteriepack (P) nach Anspruch 1, wobei sich die Auslassöffnung (112) an einem unteren Abschnitt des Hohlraums (111) befindet.

11. Batteriepack (P) nach Anspruch 1, wobei das Kühlmittel (W) einen Siedepunkt von gleich oder höher als 100 Grad und gleich oder niedriger als 140 Grad aufweist.

12. Batteriepack (P) nach Anspruch 1, wobei das Kühlmittel (W) Wasser umfasst.

13. Batteriepack (P) nach Anspruch 1, wobei das Kühlmittel (W) Frostschutzmittel umfasst.

14. Batteriepack (P) nach Anspruch 1, wobei das Kühlmittel (W) Kühlflüssigkeit umfasst, die Wasser und Frostschutzmittel enthält.

## Revendications

1. Bloc-batterie (P) comprenant :
un cadre de bloc (1) ; et
une pluralité de modules de batterie (M) agencés dans le cadre de bloc (1) le long d'une direction de largeur du cadre de bloc (1) et espacés les uns des autres,
dans lequel le cadre de bloc (1) comprend :
une plaque inférieure (11) ;
une plaque latérale (12) ;
une cavité (111) est ménagée dans la plaque inférieure (11) et remplie d'un fluide de refroidissement (W) sans espace vide ; et
un orifice de sortie (112) faisant communiquer un intérieur de la cavité (111) avec un extérieur du cadre de bloc (1), dans lequel au moins une partie de la cavité (111) est située à l'intérieur d'une section dans la direction de largeur s'étendant depuis une extrémité dans la direction de largeur d'un premier module de batterie (M1) jusqu'à une autre extrémité dans la direction de largeur d'un second module de batterie (M2) adjacent au premier module de batterie (M1) dans la direction de largeur, et
dans lequel l'orifice de sortie (112) est configuré pour s'ouvrir lorsqu'une pression interne de la cavité (111) est égale ou supérieure à une pression prédéterminée.

2. Bloc-batterie (P) selon la revendication 1, dans lequel une pluralité de cavités (111) est prévue.

3. Bloc-batterie (P) selon la revendication 2, dans lequel la pluralité de cavités (111) est agencée le long de la direction de largeur.

4. Bloc-batterie (P) selon la revendication 3, dans lequel la cavité (111) comprend une première cavité (111a) et une seconde cavité (111b) correspondant respectivement au premier module de batterie (M1) et au second module de batterie (M2).

5. Bloc-batterie (P) selon la revendication 1, dans lequel une plaque de séparation (13) est prévue entre le premier module de batterie (M1) et le second module de batterie (M2) pour isoler le premier module de batterie (M1) et le second module de batterie (M2) l'un de l'autre dans la direction de largeur.

6. Bloc-batterie (P) selon la revendication 5, dans lequel la plaque de séparation (13) comprend un matériau isolant.

7. Bloc-batterie (P) selon la revendication 1, dans lequel l'orifice de sortie comprend une soupape de décharge s'ouvrant lorsqu'une pression interne de la cavité est égale ou supérieure à une pression prédéterminée.

8. Bloc-batterie (P) selon la revendication 1, dans lequel l'orifice de sortie comprend un disque de rupture se rompant lorsqu'une pression interne de la cavité est égale ou supérieure à une pression prédéterminée.

9. Bloc-batterie (P) selon la revendication 1, dans lequel l'orifice de sortie (112) est situé au niveau d'une partie supérieure de la cavité (111).

10. Bloc-batterie (P) selon la revendication 1, dans lequel l'orifice de sortie (112) est situé au niveau d'une partie inférieure de la cavité (111).

11. Bloc-batterie (P) selon la revendication 1, dans lequel le fluide de refroidissement (W) a un point d'ébullition égal ou supérieur à 100 degrés et égal ou inférieur à 140 degrés.

12. Bloc-batterie (P) selon la revendication 1, dans lequel le fluide de refroidissement (W) comprend de l'eau.

13. Bloc-batterie (P) selon la revendication 1, dans lequel le fluide de refroidissement (W) comprend de l'antigel.

14. Bloc-batterie (P) selon la revendication 1, dans lequel le fluide de refroidissement (W) comprend un liquide de refroidissement contenant de l'eau et de l'antigel.
